# EUROPEAN PATENT SPECIFICATION

(11) **EP 4 378 824 B1**
(45) Date of publication and mention of the grant of the patent: **29.07.2026**
(21) Application number: 22210462.2
(22) Date of filing: 30.11.2022
(51) Int. Cl.: B64C 3/18, B64C 9/22

(54) **FLOW BODY FOR AN AIRCRAFT WITH SPLIT RIBS**
STRÖMUNGSKÖRPER FÜR EIN FLUGZEUG MIT GETEILTEN RIPPEN
CORPS D'ÉCOULEMENT POUR AÉRONEF À NERVURES FENDUES

(43) Date of publication of application: 05.06.2024
(73) Proprietor: Airbus Operations GmbH, 21129 Hamburg (DE)
(72) Inventor: Bensmann, Stefan, 21129 Hamburg (DE); Fees, Martin, 21129 Hamburg (DE)
(74) Representative: LKGLOBAL Partnerschaftsgesellschaft mbB

(56) References cited:
- EP-B1- 2 049 394
- GB-A- 2 552 207
- US-A1- 2011 168 324
- US-A1- 2020 331 616

## Description

### Technical field

The invention relates to a movable flow body for an aircraft, a wing for an aircraft as well as an aircraft.

### Background of the invention

For increasing the lift coefficient of a wing of an aircraft, high-lift systems are known. These often include trailing edge flaps and movable leading-edge devices, which are selectively operable. For example, they are usually activated during takeoff and landing, i.e. moved from a retracted into an extended position.

Leading-edge devices may include leading-edge slats, which are flow bodies usually having a front skin, a back skin, and mechanical interfaces for coupling with a slat track or another drive mechanism. One or several ribs are often provided inside the flow bodies for stiffening and for carrying the skins. For example, ribs are often made from a metallic material and extend straightly to the front skin, and often run parallel to the longitudinal axis of the aircraft or perpendicular to the leading edge of the respective flow body. This results in a high stiffness step in a contact region with the front skin. In case of a bird strike, the front skin may thus experience a rupture in this region.

Exemplarily, US 8 276 847 B2 proposes a cover for an aircraft structure, in particular for nose parts of the vertical tail, horizontal tail or the wing, including a skin and a support structure. The skin is arranged on the support structure and the support structure includes a plurality of ribs and a plurality of stringers. The plurality of stringers are arranged on the plurality of ribs to support the skin and each comprise a multitude of weakened areas positioned opposite to a stringer base, which stringer base is adapted to support the skin, in order to increase a plastic deformation area.

GB 2 552 207 A refers to a wing rib assembly comprising a central portion and a plurality of feet connected to its periphery. A wing cover or skin is connected to the outer surface of the feet to form the assembly. The assembly may be made by connecting the feet to the central portion first and then connecting the cover to the feet or can be made with the feet being connected to the cover first and then connecting the resulting structure to the rib central portion. The feet may take the form of a triangular shape or prism shape structures. The feet may be made by preforming a length of material, separating the length of material into a plurality of individual connection feet and connecting the connection feet to the periphery of the central portion to form a rib. The feet may include a stem for attaching to the rib plate by welding such as using linear friction welding. The rib plate may be machined to reduce its width but to leave web portions.

US 2011/168324 A1 refers to a method allowing the production of a complex, integral (onepiece) fibre composite part having a plurality of internal and undercut stiffening elements employing removable cores. Because connection elements are no longer necessary, a high weight savings potential results, because, for example, rivets and rivet flanges required for this purpose, as in the case of conventional assembly from individual parts (differential construction), become superfluous.

EP 2 049 394 B1 related to a heated leading-edge component for an aircraft and a method of manufacture thereof. The leading-edge component includes an outer skin, a supporting rib for the outer skin, and a cavity located substantially in-between the outer skin and the rib for receiving a heater. The rib is attached to the outer skin on either side of the cavity.

### Summary of the invention

It is an object of the invention to propose an alternate flow body, which can withstand bird strikes, and which is able to eliminate or strictly limit ruptures in its skin.

This object is met by a movable flow body for an aircraft having the features of independent claim 1. Advantageous embodiments and further improvements may be gathered from the subclaims and the following description.

A flow body for an aircraft is proposed, comprising a front skin having an outer surface configured to be contacted by an ambient flow, and an inner surface opposite the outer surface, at least one rib arranged inside the flow body and having a first side and a second side, wherein the at least one rib comprises two independent flanges, wherein the two flanges extend from a common junction section, which is arranged between the first side and the second side, to the first side, wherein the two flanges diverge towards the first side, and wherein each flange comprises an attachment strap at the first side for attaching the respective flange to the front skin, wherein the respective attachment strap has a shape corresponding to the shape of the inner surface of the front skin, and wherein the flanges are each curved in a concave manner in an outward direction, where the outward direction of one flange points away from the other flange, and do not straightly extend from the common junction section to the front skin, or wherein the at least one rib is made from two sheet metal components forming two halves of said rib, wherein the two sheet metal components are joined together between the junction section and the second side to form a web section, which acts as a connection region where both halves are connected.

The flow body and in particular the front skin may form a nose part of a vertical tailplane, a horizontal tailplane, an engine nacelle or of a wing of an aircraft. It may be a fixed or a movable flow body. For example, the flow body may comprise an elongate shape that extends along a spanwise direction, if it forms part of the wing or of the horizontal tailplane. The flow body further comprises a certain profile contour, which is mainly determined by the desired aerodynamic characteristics. It is preferred that the flow body is sufficiently stiff to serve for the intended purpose. It is conceivable that the flow body comprises a plurality of stiffening elements, such as ribs, spars, and stringers, which are distributed inside the flow body. The at least one rib may extend parallel to the longitudinal direction of the aircraft or substantially perpendicular to a leading edge of the flow body. In the following, the term "first side" refers to a leading-edge side of the flow body, wherein the "second side" refers to the opposite side.

Thus, the flow body according to the invention is basically comparable to a common flow body and has a curved front skin in contact with an ambient air flow. In an interior of the flow body, one of the stiffening elements includes at least one rib, which is designed according to the above. Hence, the respective rib does not comprise a single web that straightly extends from the first side to the second side. Instead, the web is split into two flanges, which run from a common junction section at a location between the first side and the second side towards the inner surface of the front skin. The flanges diverge from each other between the junction section and the inner surface of the front skin in a way that their distance increases towards the front skin. It is conceivable that the at least one rib refers to two or more ribs, if a flow body with a larger spanwise extension is considered.

By changing the web design from a single web to two obliquely arranged flanges, the rib has a decreased stiffness in the resulting two contact regions compared to the single contact region of a single web. A bird strike or another impact of an object onto the flow body thus leads to a greater deformation of the front skin, which may be accompanied by a bending deformation of the flanges due their reduced stiffness and oblique orientation. The front skin is thus able to absorb more kinetic energy before it experiences a rupture, which clearly reduces the risk of a damage of the respective flow body.

The common junction section is to be understood as a section of the at least one rib, where the two flanges merge into a web of the at least one rib. At the first side, i.e. at the forward ends of the flanges, the attachment straps of the two flanges are provided. Due to the diversion of the flanges, the attachment straps are placed at a distance to each other. The front skin may thus deform into an intermediate space between two adjacent attachment straps, thereby further bending the diverting flanges away from each other.

The attachment straps extend away from the flanges and conform the shape of the inner surface of the front skin. They allow to provide a connection of the front skin to the at least one rib through fasteners, such as rivets, or through material bonding.

The at least one rib may be a simple stiffening rib or it may be a load introduction rib, which is coupled with a drive mechanism for driving the flow body. A load introduction rib would be mechanically adapted to provide a reliable load transfer between the flow body and the drive mechanism, such as a slat track mechanism or similar. The rib would then comprise a coupling element at the second side.

The rib may be made from a metallic material, e.g. by bending a sheet metal material, by milling a metal workpiece or by an additive manufacturing process. As an alternative, a plastic material, in particular a fiber reinforced plastic material, such as CFRP, may be used. Depending on the desired shape and dimension, it is also conceivable that the at least one rib is made from two halves, which are joined together in a web section and the junction section, wherein the two flanges are each created by one the halves. Joining the halves may be conducted through fasteners, such as rivets, or through materially bonding, e.g. welding, gluing or co-curing. It is conceivable to use fasteners for joining the halves, when they are made from a metal material or from a fiber reinforced plastic material. If a metal material or a thermoplastic material are used, a welding connection may also be provided. If a thermoset plastic material is used, also co-curing of both halves may be conducted.

In an advantageous embodiment, the attachment straps each comprise a bonding surface facing the inner surface of the front skin, wherein the straps are materially bonded to the inner surface of the front skin. Materially bonding the bonding surface and the inner surface may be conducted by one of several possible processes that allow to provide a sufficiently sturdy connection of the flanges and the front skin. For example, the attachment straps and the inner surface may be bonded by gluing, welding, or co-curing. In all cases, a riveting connection between the attachment straps and the front skin can be eliminated, which leads to a clean outer surface of the front skin and an elimination of induced drag stemming from rivets.

In an advantageous embodiment, the attachment straps each comprise a bonding surface facing the inner surface of the front skin, wherein the attachment straps are materially bonded to the inner surface of the front skin. Depending on the material used for the front skin and the at least one rib, several different bonding processes may be used. For example, both components may be glued, or welded together. If a thermoset material is used, the components may be co-cured to form a connection therebetween.

However, common other fastening techniques may be used, for example riveting.

In an embodiment, the flanges are substantially planar between the junction section and the attachment straps. Thus, the distance between both flanges increases proportionally with increasing distance to the junction section. This simplifies the manufacturing and may eliminate complex manufacturing tools.

According to an option of the invention, the flanges between the junction section and the attachment straps are curved, such that a distance increase between the two flanges along the course from the junction section towards the first side is progressive. This substantially prevents that an impact direction of an object can be coplanar with one of the flanges. Thus, substantially under all impact directions of an object, a bending or buckling load acts onto the flanges, which lead to increasing the amount of kinetic energy that is absorbed by the flow body.

In an advantageous embodiment, the at least one rib further comprises a substantially flat web section between the junction section and the second end. The web section may comprise two or more different thicknesses, but substantially extends along a single plane from the junction section to the second end. The part between the junction section and the second end may thus correspond to a common design of a rib.

In an advantageous embodiment, the at least one rib further comprises a collar extending transversely away from the rib, wherein the collar is arranged on or adjacent to the junction section. The collar allows a connection with a spar or another structural element inside the flow body. The collar may thus act similar to a flange for a load transfer. If a flow body without a spar or other respective structural element is provided, the collar may be eliminated. Still further, the collar may increase the structural stability of the at least one rib directly at the junction section. Thus, a deformation of the at least one rib during an impact mainly develops at the part between the junction section and the first end.

In an advantageous embodiment, the two flanges enclose a transition region adjacent to the junction section and facing the front skin, wherein the transition region is rounded and substantially free of kinks. A rupture of the rib starting from a more or less pronounced edge in the transition region and traveling to the second end may thus be prevented.

In an advantageous embodiment, a common web section is arranged between the junction section and the collar. This increases the stiffness of the at least one web even further and may allow to provide a larger transition to two flanges.

In an advantageous embodiment, at least one rib comprises a load introduction rib having at least one coupling element at the second side. Thus, not only stiffening ribs can be provided with the same design principle. A load introduction rib is to be understood a stiffening rib that is mechanically adapted for providing a reliable load transfer between the flow body and a drive mechanism, such as a slat track mechanism or similar. The coupling element is provided at the second side of the respective rib and may include at least one of a variety of different mechanical elements that allow to couple the respective rib with the drive mechanism.

According to an option of the invention, the at least one rib is made from two sheet material components that are joined together in a connection region between the junction section and the second side. The sheet material is a metal material. If metal sheets are used, they may be bent into shape and may be connected in the connection region through fasteners, such as rivets, bolts, and nuts. Alternatively, the metal sheets may be materially bonded, such as through welding or gluing. For example, the at least one rib is made from an aluminium alloy, while Titanium may also be conceivable. However, if sheets of a fiber reinforced plastic material are used, the connecting process may depend on the properties of the material. For example, the fiber reinforced plastic material comprises a thermoplastic matrix, such as polyetherketoneketone (PEKK), polyetheretherketone (PEEK), polyetherimide, polycarbonate, polypropylene and others. This would allow welding the two sheet material components together. However, the material may comprise a thermoset matrix, such that it may be feasible to co-cure both sheet material components to form an integral part. It is to be understood, that gluing the components together is also conceivable.

The invention further relates to a wing for an aircraft, comprising at least one flow body according to any of the preceding claims arranged in a leading-edge region.

In an advantageous embodiment, the at least one flow body is movably arranged on a fixed wing body of the wing. For example, the flow body may be a leading-edge slat or the like.

The invention also relates to an aircraft having at least one wing according to the above and/or at least one flow body according to the above. In general it is also possible to arrange the flow body according to the invention at a leading-edge region of a vertical tailplane, a horizontal tailplane, an engine nacelle or other.

### Brief description of the figures

In the following, the attached drawings are used to illustrate exemplary embodiments in more detail. The illustrations are schematic and not to scale. Identical reference numerals refer to identical or similar elements. They show:
Figs. 1 and 2 show an exemplary embodiment of a flow body.
Figs. 3 and 4 show a flow body that is not according to the claims.
Figs. 5 and 6 show a flow body that is not according to the claims.
Figs. 7 and 8 show a further exemplary embodiment of a flow body.
Fig. 9 shows an aircraft.

### Detailed description of exemplary embodiments

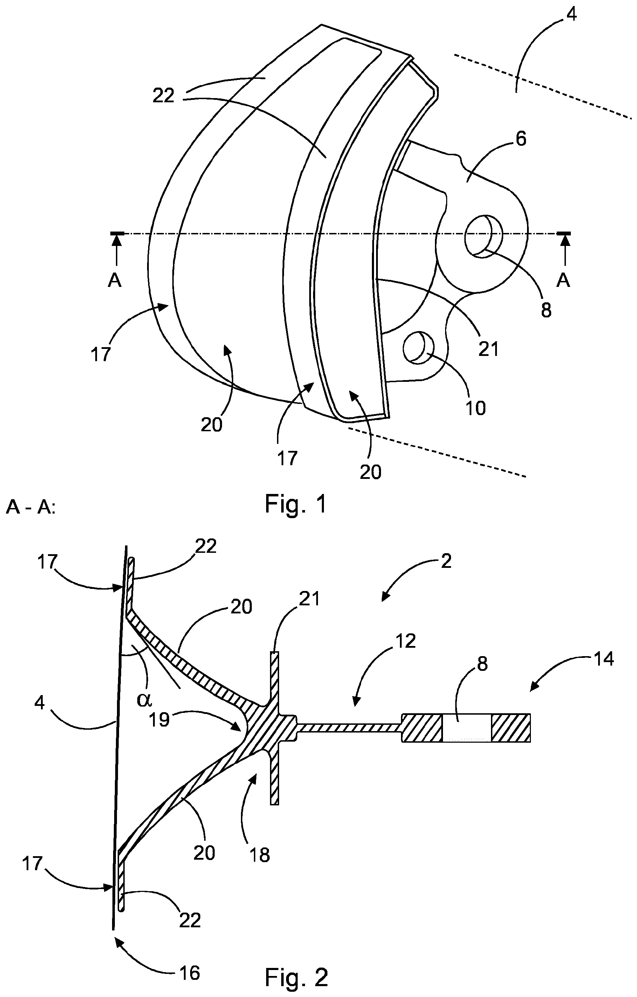

Fig. 1 shows a flow body 2 having a front skin 4 and at least one stiffening rib 6. Here, the stiffening rib 6 is shown as a load introduction rib, which has two lugs 8 and 10 for coupling with a drive mechanism, which is not shown herein. The front skin 4 is not shown in detail, but is indicated with dashed lines for improving the visibility of the interior structure of the flow body 2. In addition, fig. 2 shows a cross-sectional view of the flow body 2, wherein the respective sectional plane is indicated by the letters A in fig. 1.

The rib 6 comprises a web section 12, which includes the lugs 8 and 10. The lug 8 is arranged at a second side 14, while the front skin 4 is placed at the oppositely arranged first side 16. Between the first side 14 and the second side 16, a junction section 18 is provided, wherein the web section 12 extends from the junction section 18 to the second side 14. Two flanges 20 extend from the junction section 18 to the front skin 4. They enclose a transition region 19 adjacent to the junction section. The transition region 19 is completely rounded, such that a harmonic transition between the flanges 20 is made.

On their course to the front skin 4 the flanges 20 diverge, leading to a greater distance at the first side 16 than at the junction section 18. At the first side 16, attachment straps 22 are placed, which are in flush contact with an inner surface of the front skin 4. They comprise a bonding surface 17 that is to be bonded or clamped to the inner surface. An outer surface, which is opposite to the inner surface, is in contact with the ambient flow of the flow body 2.

As demonstrated in fig. 2, the flanges 20 are slightly curved in an outward direction and thus do not straightly extend to the front skin 4. In this exemplary embodiment, the curvature is substantially constant. At the first side 16, the flanges 20 and the front skin 4 enclose and angle α of about 40°. However, other angles are conceivable. If a bird or another object impinges onto the outer surface, the front skin 4 will deform.

Depending on the impact location, impact direction and impact strength, the flanges 20 will face a certain mechanical load that leads to a deformation of the flanges 20 as well. Due to their oblique arrangement and decreased stiffness compared to a single and transversely arranged flange, a larger area of the front skin 4 will be deformed, which in turn leads to a greater absorption of kinetic energy without creating a rupture in the front skin 4. Since the flanges 20 are not straight, an impact direction does not exist that solely acts in the plane of a flange 20 and the flanges 20 will substantially always face a bending or buckling force. Thus, the rib 6 comprises an improved impact behavior.

At the junction section 18, a collar 21 is provided, which substantially extends perpendicular to the web section 12 away from the junction section 18. This increases the axial area moment of inertia with respect to a local normal on the inner surface of the front skin 4 and thus improves the mechanical stability of the rib 6. The web section 12 substantially extends between the collar 21 and the second side, wherein the flanges 20 substantially extend between the collar 21 and the first side 16.

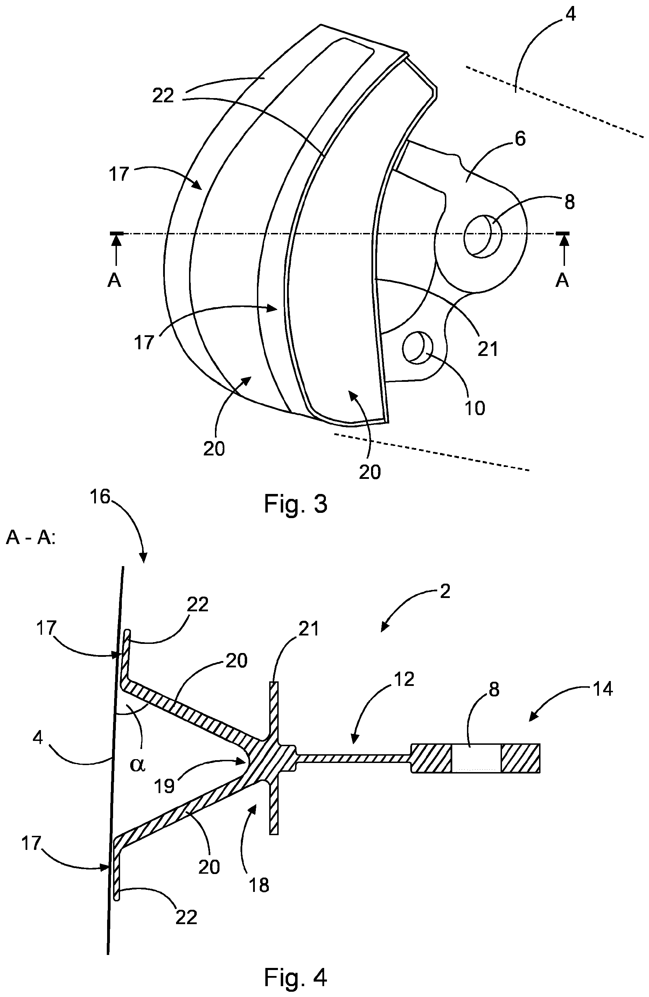

Figs. 3 and 4 show a rib 6 that is not according to the appended claims.

In figs. 3 and 4, the rib 6 is shown having two flanges 20 that extend along a straight line in the cross-sectional profile. This reduces the effort for manufacturing the rib 28 and will also lead to a bending and buckling force at least in the majority of impact directions.

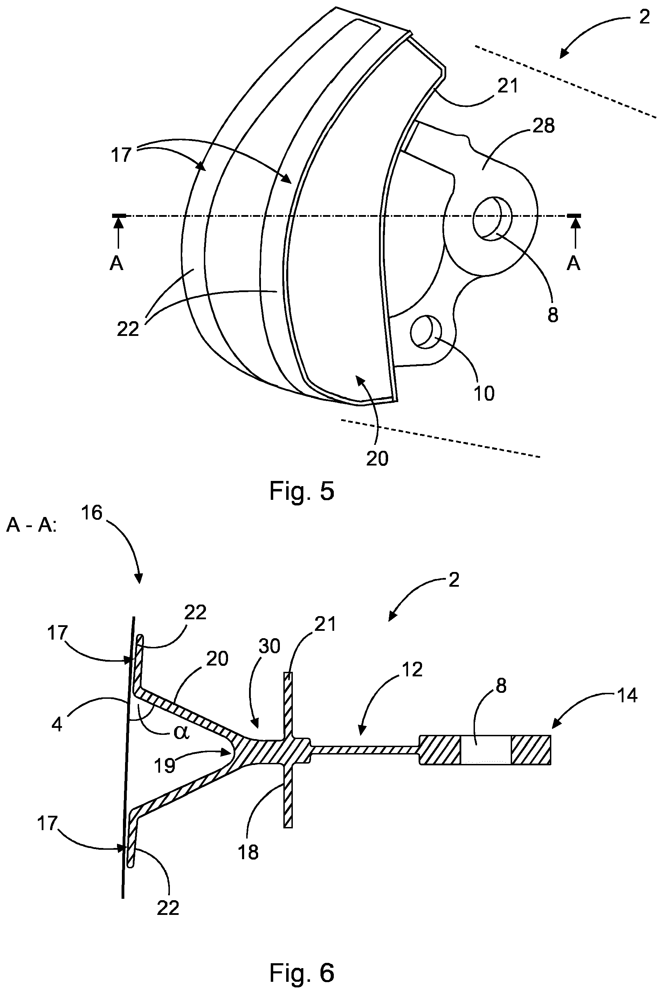

Figs. 5 and 6 show a further rib 28 that is not according to the appended claims. Figs. 5 and 6 show the rib 28, which is also created in the form of a load introduction rib. The general design is similar to the design shown in figs. 1 to 4. However, in addition to two straightly extending flanges 20, the rib 28 comprises a common web section 30, which may be understood as an extended common junction section. The common web section 30 extends between the collar 21 and the flanges 20 and leads to a greater stiffness of the rib 28 in this region.

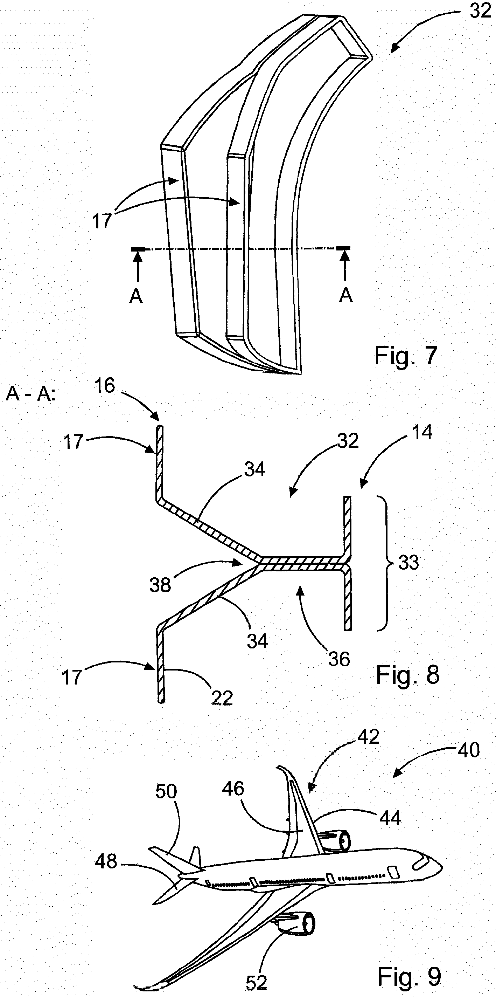

Figs. 7 and 8 show a rib 32, which is designed as a stiffening rib and does not provide a load introduction feature. Here, the rib 32 is made from a sheet metal and comprises two halves 34, which are joined together to form a web section 36. The web section 36 also acts as a connection region, where both halves are connected. The connection may be provided through using fasteners, such as rivets or bolts. However, they may also be materially bonded. The halves 34 diverge from each other coming from the web section 36 running towards the first side 16. At the end of the web section 36 facing the front skin 4, a junction section 38 is created, where the two halves 34 are kinked and start to diverge.

At the second side 14 of the rib 32, an attachment flange 33 is provided, which is to be connected to a spar or another structural component inside the flow body or a back skin of the flow body 2 (not shown).

Fig. 9 shows an aircraft 40, having wings 42 with leading edges 44 and a fixed wing body 46, at which a flow body 2 according to the above may be provided. The aircraft 40 further comprises a horizontal tailplane 48, a vertical tailplane 50 and engine nacelles 52, which may also be equipped with a flow body 2 according to the above.

### Reference numerals

- 2: flow body
- 4: front skin
- 6: rib
- 8: lug
- 10: lug
- 12: web section
- 14: second side
- 16: first side
- 18: junction section
- 19: transition region
- 20: flange
- 21: collar
- 22: attachment strap
- 28: rib
- 30: common web section
- 32: rib
- 33: attachment flange
- 34: half
- 36: web section / connection region
- 38: junction section
- 40: aircraft
- 42: wing
- 44: leading edge
- 46: fixed wing body
- 48: horizontal tailplane
- 50: vertical tailplane
- 52: engine nacelle

## Claims

1. A flow body (2) for an aircraft (40), comprising:
a front skin (4) having an outer surface configured to be contacted by an ambient flow, and an inner surface opposite the outer surface,
at least one rib (6, 32) arranged inside the flow body (2) and having a first side (16) and a second side (14),
wherein the at least one rib (6, 32) comprises two independent flanges (20),
wherein the two flanges (20) extend from a common junction section (18), which is arranged between the first side (16) and the second side (14), to the first side (16),
wherein the two flanges (20) diverge towards the first side (16),
wherein each flange (20) comprises an attachment strap (22) at the first side (16) for attaching the respective flange (20) to the front skin (4), wherein the respective attachment strap (22) has a shape corresponding to the shape of the inner surface of the front skin (4), and
**characterised in that**
the flanges (20) are each curved in a concave manner in an outward direction, where the outward direction of one flange points away from the other flange, and do not straightly extend from the common junction section (18) to the front skin (4), or
the at least one rib (32) is made from two sheet metal components (34) forming two halves of said rib (32), wherein the two sheet metal components (34) are joined together between the junction section (38) and the second side (14) to form a web section (36), which acts as a connection region (36) where both halves are connected.

2. The flow body (2) according to claim 1,
wherein the attachment straps (22) each comprise a bonding surface (17) facing the inner surface of the front skin (4), and
wherein the bonding surfaces (17) of the attachment straps (22) are materially bonded to the inner surface of the front skin (4).

3. The flow body (2) according to any of the preceding claims,
wherein the at least one rib (6, 32) further comprises a substantially flat web section (12, 36) between the junction section (18) and the second end.

4. The flow body (2) according to any of the preceding claims,
wherein the at least one rib (6, 32) further comprises a collar (21) extending transversely away from the rib (6, 32), and
wherein the collar (21) is arranged on or adjacent to the junction section (18).

5. The flow body (2) according to any of the preceding claims,
wherein the two flanges (20) enclose a transition region (19) adjacent to the junction section (18) and facing the front skin (4), and
wherein the transition region (19) is completely rounded and substantially free of kinks, such that a harmonic transition between the flanges (20) is made.

6. The flow body (2) according to claim 4,
wherein a common web section (30) is arranged between the junction section (18) and the collar (21).

7. The flow body (2) of any of the preceding claims,
wherein at least one rib (6, 32) comprises a load introduction rib (6) having at least one coupling element (8, 10) at the second side (14).

8. A wing (42) for an aircraft (40), comprising at least one flow body (2) according to any of the preceding claims arranged in a leading-edge region of the wing (42).

9. The wing (42) according to claim 8, wherein the at least one flow body (2) is movably arranged on a fixed wing body (46) of the wing (42).

10. An aircraft (40) having at least one wing (42) according to claim 8 or 9 and/or at least one flow body (2) according to any of the claims 1 to 7.

## Patentansprüche

1. Strömungskörper (2) für ein Flugzeug (40), umfassend:
eine Vorderhaut (4) mit einer Außenfläche, die konfiguriert ist, um von einer Umgebungsströmung berührt zu werden, und einer Innenfläche gegenüber der Außenfläche,
mindestens eine Rippe (6, 32), die innerhalb des Strömungskörpers (2) angeordnet ist und eine erste Seite (16) und eine zweite Seite (14) aufweist,
wobei die mindestens eine Rippe (6, 32) zwei unabhängige Flansche (20) umfasst,
wobei sich die zwei Flansche (20) von einem gemeinsamen Verbindungsabschnitt (18), der zwischen der ersten Seite (16) und der zweiten Seite (14) angeordnet ist, zur ersten Seite (16) erstrecken,
wobei die zwei Flansche (20) zur ersten Seite (16) divergieren,
wobei jeder Flansch (20) einen Befestigungsriemen (22) an der ersten Seite (16) zum Befestigen des jeweiligen Flansches (20) an der Vorderhaut (4) umfasst, wobei der jeweilige Befestigungsriemen (22) eine Form aufweist, die der Form der Innenfläche der Vorderhaut (4) entspricht, und
**dadurch gekennzeichnet, dass**
die Flansche (20) jeweils konkav in einer Auswärtsrichtung gekrümmt sind, wobei die Auswärtsrichtung eines Flansches von dem anderen Flansch weg zeigt, und sich nicht gerade vom gemeinsamen Verbindungsabschnitt (18) zur Vorderhaut (4) erstrecken, oder
die mindestens eine Rippe (32) aus zwei Blechkomponenten (34) hergestellt ist, die zwei Hälften der Rippe (32) bilden, wobei die zwei Blechkomponenten (34) zwischen dem Verbindungsabschnitt (38) und der zweiten Seite (14) miteinander verbunden sind, um einen Stegabschnitt (36) zu bilden, der als ein Verbindungsbereich (36) wirkt, wo beide Hälften verbunden sind.

2. Strömungskörper (2) nach Anspruch 1,
wobei die Befestigungsriemen (22) jeweils eine Klebefläche (17) umfassen, die der Innenfläche der Vorderhaut (4) zugewandt ist, und
wobei die Klebeflächen (17) der Befestigungsriemen (22) stoffschlüssig mit der Innenfläche der Vorderhaut (4) verbunden sind.

3. Strömungskörper (2) nach einem der vorhergehenden Ansprüche,
wobei die mindestens eine Rippe (6, 32) ferner einen im Wesentlichen flachen Stegabschnitt (12, 36) zwischen dem Verbindungsabschnitt (18) und dem zweiten Ende umfasst.

4. Strömungskörper (2) nach einem der vorhergehenden Ansprüche,
wobei die mindestens eine Rippe (6, 32) ferner einen Kragen (21) umfasst, der sich quer von der Rippe (6, 32) weg erstreckt, und
wobei der Kragen (21) auf oder angrenzend an den Verbindungsabschnitt (18) angeordnet ist.

5. Strömungskörper (2) nach einem der vorhergehenden Ansprüche,
wobei die zwei Flansche (20) einen Übergangsbereich (19) angrenzend an den Verbindungsabschnitt (18) einschließen, der der Vorderhaut (4) zugewandt ist, und
wobei der Übergangsbereich (19) vollständig abgerundet und im Wesentlichen knickfrei ist, so dass ein harmonischer Übergang zwischen den Flanschen (20) hergestellt wird.

6. Strömungskörper (2) nach Anspruch 4,
wobei ein gemeinsamer Stegabschnitt (30) zwischen dem Verbindungsabschnitt (18) und dem Kragen (21) angeordnet ist.

7. Strömungskörper (2) nach einem der vorhergehenden Ansprüche,
wobei mindestens eine Rippe (6, 32) eine Lasteinleitungsrippe (6) mit mindestens einem Kopplungselement (8, 10) an der zweiten Seite (14) umfasst.

8. Flügel (42) für ein Flugzeug (40), umfassend mindestens einen Strömungskörper (2) nach einem der vorhergehenden Ansprüche, der in einem Vorderkantenbereich des Flügels (42) angeordnet ist.

9. Flügel (42) nach Anspruch 8, wobei der mindestens eine Strömungskörper (2) beweglich an einem festen Flügelkörper (46) des Flügels (42) angeordnet ist.

10. Flugzeug (40) mit mindestens einem Flügel (42) nach Anspruch 8 oder 9 und/oder mindestens einem Strömungskörper (2) nach einem der Ansprüche 1 bis 7.

## Revendications

1. Corps d'écoulement (2) pour un aéronef (40), comprenant:
un peau avant (4) ayant une surface extérieure configurée pour être en contact avec un écoulement ambiant, et une surface intérieure opposée à la surface extérieure,
au moins une nervure (6, 32) agencée à l'intérieur du corps d'écoulement (2) et ayant un premier côté (16) et un second côté (14),
dans lequel l'au moins une nervure (6, 32) comprend deux semelles indépendantes (20),
dans lequel les deux semelles (20) s'étendent à partir d'une section de jonction commune (18), qui est agencée entre le premier côté (16) et le second côté (14), jusqu'au premier côté (16),
dans lequel les deux semelles (20) divergent vers le premier côté (16),
dans lequel chaque semelle (20) comprend une sangle de fixation (22) au niveau du premier côté (16) pour fixer la semelle respective (20) à la peau avant (4), dans lequel la sangle de fixation respective (22) a une forme correspondant à la forme de la surface intérieure de la peau avant (4), et
**caractérisé en ce que**
les semelles (20) sont chacune incurvées de manière concave dans une direction vers l'extérieur, où la direction vers l'extérieur d'une semelle pointe à l'opposé de l'autre semelle, et ne s'étendent pas en ligne droite à partir de la section de jonction commune (18) jusqu'à la peau avant (4), ou
l'au moins une nervure (32) est constituée de deux composants en tôle (34) formant deux moitiés de ladite nervure (32), dans lequel les deux composants en tôle (34) sont joints ensemble entre la section de jonction (38) et le second côté (14) pour former une section d'âme (36), qui agit comme une région de raccordement (36) où les deux moitiés sont raccordées.

2. Corps d'écoulement (2) selon la revendication 1,
dans lequel les sangles de fixation (22) comprennent chacune une surface de liaison (17) faisant face à la surface intérieure de la peau avant (4), et
dans lequel les surfaces de liaison (17) des sangles de fixation (22) sont liées matériellement à la surface intérieure de la peau avant (4).

3. Corps d'écoulement (2) selon l'une quelconque des revendications précédentes,
dans lequel l'au moins une nervure (6, 32) comprend en outre une section d'âme sensiblement plate (12, 36) entre la section de jonction (18) et la seconde extrémité.

4. Corps d'écoulement (2) selon l'une quelconque des revendications précédentes,
dans lequel l'au moins une nervure (6, 32) comprend en outre un collier (21) s'étendant transversalement à l'écart de la nervure (6, 32), et
dans lequel le collier (21) est agencé sur ou adjacent à la section de jonction (18).

5. Corps d'écoulement (2) selon l'une quelconque des revendications précédentes,
dans lequel les deux semelles (20) enferment une région de transition (19) adjacente à la section de jonction (18) et faisant face à la peau avant (4), et
dans lequel la région de transition (19) est complètement arrondie et sensiblement exempte de coudes, de sorte qu'une transition harmonique entre les semelles (20) est réalisée.

6. Corps d'écoulement (2) selon la revendication 4,
dans lequel une section d'âme commune (30) est agencée entre la section de jonction (18) et le collier (21).

7. Corps d'écoulement (2) selon l'une quelconque des revendications précédentes,
dans lequel au moins une nervure (6, 32) comprend une nervure d'introduction de charge (6) ayant au moins un élément de couplage (8, 10) au niveau du second côté (14).

8. Aile (42) pour un aéronef (40), comprenant au moins un corps d'écoulement (2) selon l'une quelconque des revendications précédentes agencé dans une région de bord d'attaque de l'aile (42).

9. Aile (42) selon la revendication 8, dans laquelle l'au moins un corps d'écoulement (2) est agencé de manière mobile sur un corps d'aile fixe (46) de l'aile (42).

10. Aéronef (40) ayant au moins une aile (42) selon la revendication 8 ou 9 et/ou au moins un corps d'écoulement (2) selon l'une quelconque des revendications 1 à 7.
